# EUROPEAN PATENT SPECIFICATION

(11) **EP 3 964 689 B1**
(45) Date of publication and mention of the grant of the patent: **28.10.2026**
(21) Application number: 21195631.3
(22) Date of filing: 08.09.2021
(51) Int. Cl.: F01C 21/02, F04C 2/18, F04C 15/00

(54) **GEAR PUMP WITH SELF-LUBRICATING BEARINGS**
ZAHNRADPUMPE MIT SELBSTSCHMIERENDEN LAGERN
POMPE À ENGRENAGES DOTÉE DE PALIERS AUTOLUBRIFIANTS

(30) Priority: 08.09.2020 US 202063075657 P
(43) Date of publication of application: 09.03.2022
(73) Proprietor: Eaton Intelligent Power Limited, Dublin 4 (IE)
(72) Inventor: CLEMENTS, Martin Augustine, Loveland, 45140 (US)
(74) Representative: Schwan Schorer & Partner mbB

(56) References cited:
- EP-A1- 1 855 007
- EP-A2- 0 669 465
- WO-A1-2017/066456
- GB-A- 738 782
- US-A- 2 887 058
- US-A- 3 748 063

## Description

### TECHNICAL FIELD

The present application relates to a gear pump which is configured for providing adequate, reliable, and variable fluid flow to a journal bearing of the gear pump during different modes of operation.

### BACKGROUND

Pumps come in a variety of types and have a variety of different applications. One type of known pump is a gear pump. One of the many applications of a gear pump is to pressurize and deliver jet fuel to a jet engine.

In certain fuel delivery gear pump configurations, the pressurized fluid that flows through the gear pump is used to lubricate internal components of the gear pump. In some configurations, the pressurized fluid is directed to an interface between a journal bearing and a rotating shaft (i.e., bearing shaft interface). The amount of lubrication desired at the bearing interface depends in part on the speed of rotation of the shaft and the pressure delivered by the pump, which are correlated to the amount of frictional forces that would be generated at the bearing shaft interface.

Gear pumps for fuel delivery are sized and configured to provide sufficient fuel pressure and lubrication to the bearing shaft interface at all operating rotational speeds and for the entire useful life of the pump. Some expected degradation of the pump components over time is accounted for in the proper sizing of the pump. Efforts have been made to improve the design of gear pumps. Example gear pumps are disclosed in: US Pat. No. 11,060,560 to Clements; US Pat. No. 8,959,920 to Clements; and US Pat. App. Pub. No. 2018/0340471 to Nyzen et al. filed on April 26, 2018. In US 2887058 A there is disclosed a centrifugal positive displacement pump which comprises a pump casing having an inlet and an outlet. A pumping cavity therebetween houses rotary fluid displacement means to pump fluid from the inlet to the outlet. Journal and bearing surfaces are provided between the rotary fluid; displacement means and the casing. Means providing a closed fluid circuit establish a series flow from the outlet of the pump to the journal and bearing surfaces and back to the inlet of the pump. A pressure sensitive control valve means is provided in the closed fluid circuit between the outlet of the pump and the journal and bearing surfaces to control the flow of the fluid to the surfaces at predetermined pressures corresponding to certain optimum operating conditions of the pump.

### SUMMARY

The present invention is a gear pump as it is defined in claim 1.

The present invention provides a gear pump that selectively directs lubrication to certain components within the pump. When the pressure of the fluid in the pump exceeds a threshold pressure, flow paths within the pump automatically open and allow fluid in the pump to flow to a shaft bearing interface. When the pressure of the fluid in the pump is lower than a threshold pressure, the certain flow paths within the pump are closed to increase the operational efficiency of the pump. Pumps of the present invention have a prolonged useful life as the present invention minimizes parasitic loss (e.g., internal leakage) in the pump, thereby effectively increasing the pump flow capacity to permit increased flow degradation before reaching useful life flow limits of the pump. The present invention provides a system which can be used for retrofitting existing pumps to improve their longevity in the field. In addition, the features of the present invention can be incorporated into new pumps without extensive redesign of the pumping systems. The system of the present invention provides a clean, simple, efficient, and elegant improvement to current gear pump fuel delivery systems. In some embodiments, the service life of the fuel delivery gear pump can be as long as the overall useful life of the engine of which it delivers fuel.

### BRIEF DESCRIPTION OF THE FIGURES

The following drawings are illustrative of particular embodiments of the present invention and therefore do not limit the scope of the present invention. The drawings are not to scale and are intended for use in conjunction with the explanations in the following detailed description. Embodiments of the present invention will hereinafter be described in conjunction with the appended drawings, wherein like numerals denote like elements.

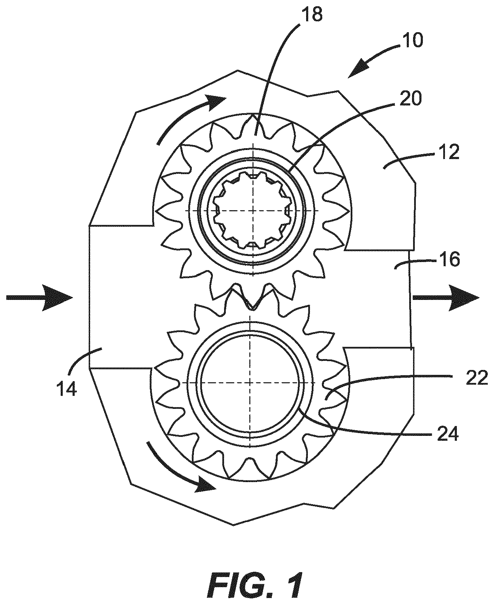

FIG. 1 is a schematic cross-sectional illustration of a gear pump consistent with the principles of the present invention;
FIG. 2 is an isometric view of a gear pump consistent with the principles of the present invention with a portion cut out for viewing;

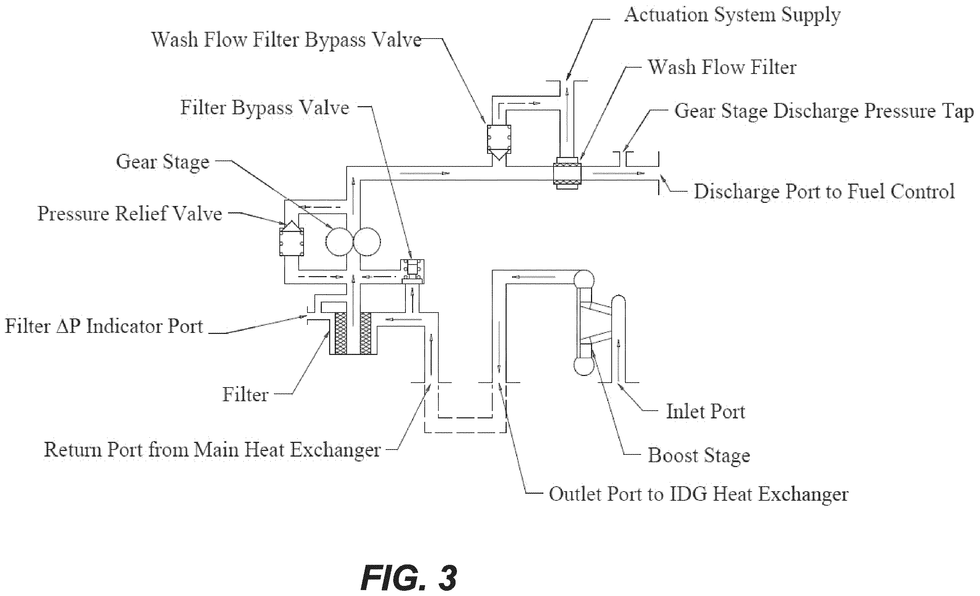

FIG. 3 is a schematic diagram of a fuel delivery gear pump system consistent with the principles of the present invention;

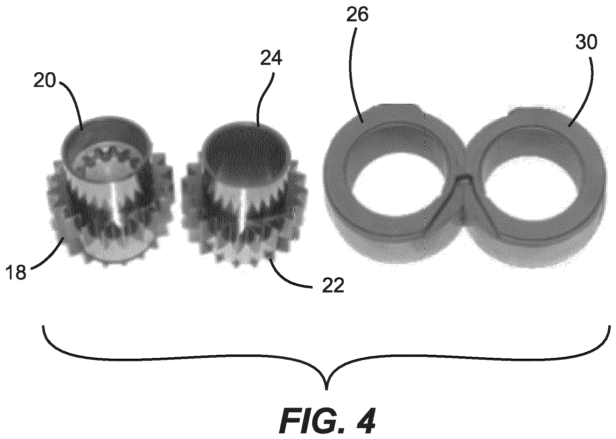

FIG. 4 is an isometric view of components of a gear pump consistent with the principles of the present invention;
FIG. 5 is an isometric view of components of a gear pump consistent with the principles of the present invention;

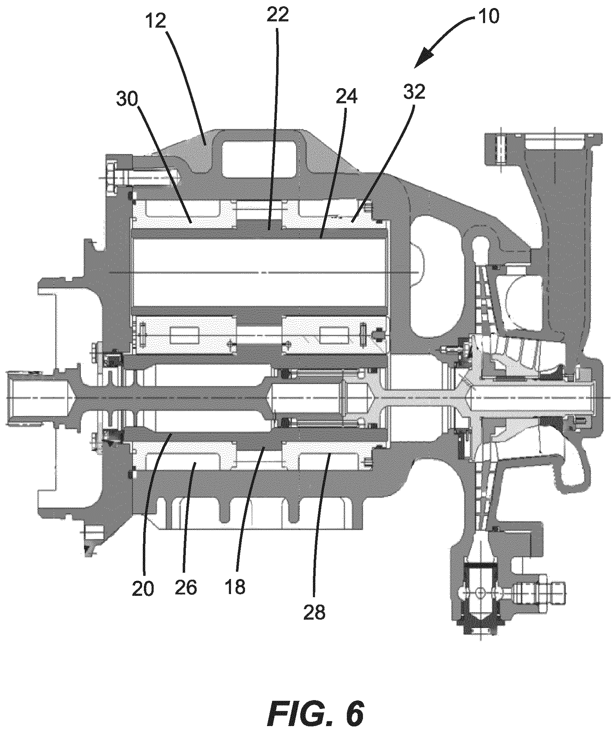

FIG. 6 is a cross-sectional view of a gear pump according to the principles of the present invention;
FIG. 7 is a schematic cross-sectional view of the shaft and bearing arrangement of the gear pump according to the principles of the present invention;
FIG. 8 is a bottom view of a bearing of the gear pump according to the principles of the present invention;
FIG. 9 is an end view of a pair of bearings of the gear pump according to the principles of the present invention;

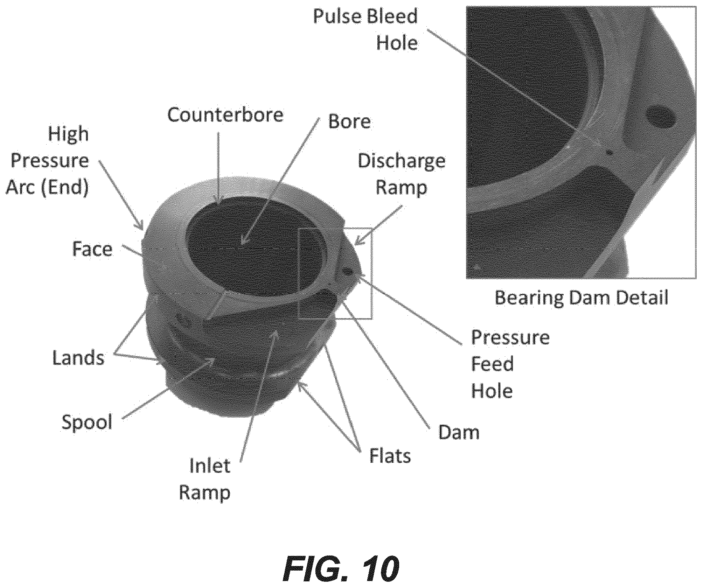

FIG. 10 is an isometric view of a bearing of the gear pump according to the principles of the present invention prior to retrofitting;
FIG. 11 is an isometric view of a bearing of the gear pump according to the principles of the present invention prior to retrofitting;
FIG. 12 is an isometric view of the inside of the bearing of the gear pump according to the principles of the present invention;
FIG. 13 is an isometric view of a bearing of the gear pump according to the principles of the present invention;
FIG. 14 is an isometric view of a bearing of the gear pump according to the principles of the present invention;
FIG. 15 is an isometric view of a bearing of the gear pump according to the principles of the present invention; and
FIG. 16 is an isometric view of a bearing of the gear pump according to the principles of the present invention.

Corresponding reference characters indicate corresponding parts throughout the several views. The exemplifications set out herein illustrate embodiments of the present invention, and such exemplifications are not to be construed as limiting the scope of the present invention in any manner.

### DETAILED DESCRIPTION

Reference will now be made in detail to embodiments of the present invention, examples of which are described herein and illustrated in the accompanying drawings. While the present invention will be described in conjunction with embodiments, it will be understood that they are not intended to limit the present invention to these embodiments. On the contrary, the present invention is intended to cover alternatives and modifications as are included within the scope of the present invention as defined by the appended claims.

Aircraft engine gear pumps have pressure-fed bearings to improve the load carrying capability of the gear stage bearings. Directed pressurized lubrication to lubricate the bearings results in parasitic loss to the pump's flow capacity and must be accounted for when sizing the pump. In the case of aircraft engine gear type pumps, pumps are typically sized to provide sufficient performance at an engine start condition. One start condition is when the engine is off while the aircraft is in flight. In this condition, the engine turbine rotates due to the movement of the air through the engine. This start condition is referred to as a windmill condition. When sizing the pump to perform at windmill, the fuel pump is typically oversized for all other operating conditions.

The present invention provides a pump that performs at windmill yet does not need to be grossly oversized for other operating conditions of the system. At conditions such as windmill where the speed is low and the bearing loads are relatively low, there is not a need for pressurized lubricating flow at the bearing shaft interface.

The principles of the present invention allow for the pressurized bearing lubrication flow to be shut off at low load conditions thereby reducing parasitic losses and allowing the pump to be sized smaller and/or operate for longer periods of time before reaching useful flow life limits. The decrease in parasitic loss at the windmill condition increases pump flow capacity at windmill for a particular sized pump.

The present invention provides a pump that retains the capability of full flow when necessary at high bearing loads. The principles of the present invention enable smaller pumps for fuel delivery to be used.

Additionally, the present invention provides redundancy in the supply of pressurized bearing lubrication flow to improve reliability for when pressurized bearing lubrication flow is desired.

In addition, since parasitic losses are minimized, the pump of the present invention has an extended useful on-wing life. The in-service life of a pump is increased and thus reduces the frequency of pump overhauls.

In the depicted embodiment, the principles of the present invention can be incorporated into the pump bearings. Therefore, advantages of the present invention can be incorporated into existing gear pump systems by swapping out the original bearings with the improved bearings thereby increasing the life of pumps currently fielded with minimal expense.

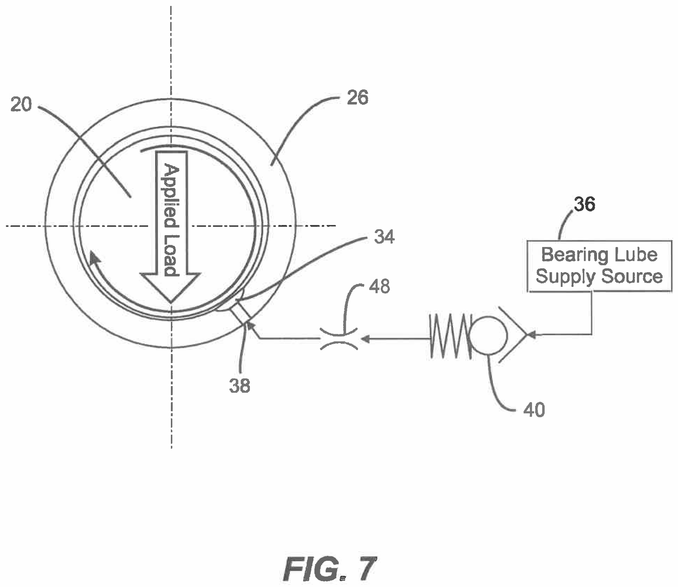

Referring to FIG. 7, a schematic illustration of an embodiment of the present invention is shown. The proposed bearing lubrication flow system includes a pressure relief valve to shut off bearing lube flow when bearing feed pressure is lower than the relief valve crack point. In the depicted embodiment, the bearing feed pressure is based on the pump discharge pressure. In the depicted embodiment, at windmill conditions, the pump discharge pressure is less than ten percent of the maximum pressure rating for the pump. In the depicted embodiment, at these reduced pressures, the pressure relief valve will be closed thereby not allowing pump discharge fluid to flow to the bearing shaft interface.

In the depicted embodiment, as the engine powers up, the rotations per minute of the engine increases and the gear pump is driven faster to deliver the sufficient fuel to the engine and higher discharge pressures are generated in the pump. In the depicted embodiment, the pump discharge pressure rises to a level that will exceed the relief valve crack point. Once the pressure reaches a threshold pressure, the relief valve opens initiating the flow of pressurized fluid to lubricate the bearing shaft interface. In the depicted embodiment, an orifice in series with the relief valve limits the lubrication flow to the desired characteristics based on bearing lube supply (pump discharge) pressure levels.

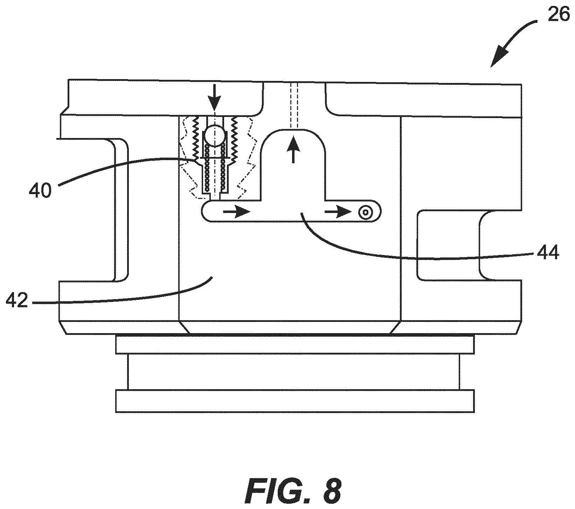

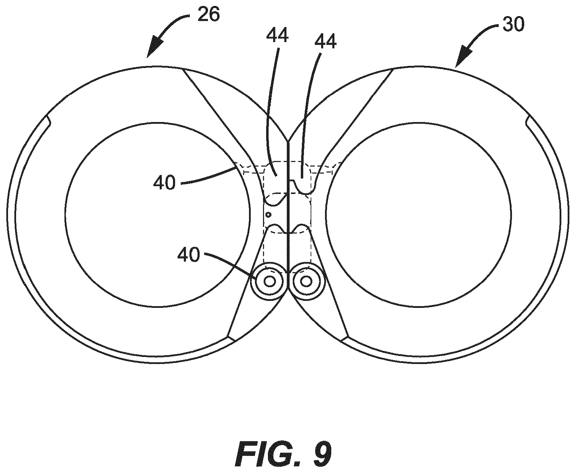

In the depicted embodiment, at pressures where lubrication feed is desired, redundancy is built such that the bearing shaft interface will receive forced lubrication even if one of the valves malfunctions. Referring to FIGS. 8-9 in the depicted embodiment, the system includes a relief valve and feed orifice in each of the four gear stage bearings. In the depicted embodiment, the post-relief valve flows from each bearing pair's relief valve for use by both bearings in the pair should the relief valve of a single bearing malfunction (i.e., fail to open).

The present invention also provides a mechanism for the switching off of the pulse bleed flow function under the low power conditions. In the depicted embodiment, the pulse bleed flow path that exits on the end face of the journal bearing receives its pressurized flow from the main flow path that extends between the high-pressure area and the bearing shaft interface. Therefore, when the main flow is closed, no pressurized fluid is driven to the pulse bleed flow path. In the depicted embodiment, since the pulse bleed flow path is downstream of the pressure relief valve in the main flow path, the pulse bleed flow path can be shut off at lower pressure conditions such as at the windmill condition.

In the depicted embodiment, the ability to switch on or off the lubrication reduces the parasitic losses at windmill thereby improving the in-service life of a given pump. In addition, the switchable feature now allows the optimization of the bearing lubrication and pulse bleed feed flows without compromising performance of the pump at the windmill condition. Optimizing bearing lubrication flow could result in increased pump pressure output capability. Optimization of the pulse bleed function could lead to a decrease in gear stage flow degradation due to cavitation and thus extending the in-service life of the pump.

The system of the depicted embodiment allows for a relatively low-cost approach to extending pump in-service life. The features of the present invention can be accomplished with modifications to existing bearings. The modifications do enable reverse compatibility (retrofitting) confined within the gear stage bearings which are typically replaced at each pump overhaul. Expense in extensive redesign and hardware replacement is avoided by placing the relief valve feature in each of the four gear stage bearings.

Referring to the figures generally, the present invention provides a gear pump 10. The gear pump 10 includes a pump housing 12, the housing 12 including a fluid inlet 14 and a fluid outlet 16. The gear pump 10 includes a drive gear 18 supported on a first shaft 20, the drive gear 18 located between a first end portion of the first shaft 20 and a second end portion of the first shaft 20. The gear pump 10 includes a driven gear 22 configured to mesh with the drive gear 18. The driven gear 22 is supported on a second shaft 24, the driven gear 22 located between a first end portion of the second shaft 24 and a second end portion of the second shaft 24. The gear pump 10 includes a first journal bearing 26 secured in the pump housing 12 configured to rotatably support the first end portion of the first shaft 20. The first journal bearing 26 defines a first bearing shaft interface 34, the first journal bearing 26 includes a first high pressure portion 36, a first journal fluid flow path 38 that extends between the first high pressure portion 36 and the first bearing shaft interface 34, and a first journal pressure relief valve 40 in the first journal fluid flow path 38. The gear pump 10 includes a second journal bearing 28 secured in the pump housing 12 configured to rotatably support the second end portion of the first shaft 20. The second journal bearing 28 defines a second bearing shaft interface, the second journal bearing 28 including a second high pressure portion, a second journal fluid flow path that extends between the second high pressure portion and the second bearing shaft interface, and a second journal pressure relief valve in the second journal fluid flow path. The gear pump 10 includes a third journal bearing 30 secured in the pump housing 12 configured to rotatably support the first end portion of the second shaft 24. The third journal bearing 30 defines a third bearing shaft interface, the third journal bearing 30 including a third high pressure portion, a third journal fluid flow path that extends between the third high pressure portion and the third bearing shaft interface, and a third journal pressure relief valve in the third journal fluid flow path. The gear pump 10 includes a fourth journal bearing 32 secured in the pump housing 12 configured to rotatably support the second end portion of the second shaft 24. The fourth journal bearing 32 defines a fourth bearing shaft interface, the fourth journal bearing 32 including a fourth high pressure portion, a fourth journal fluid flow path that extends between the fourth high pressure portion and the fourth bearing shaft interface, and a fourth journal pressure relief valve in the fourth journal fluid flow path.

It should be appreciated that many alternative configurations are possible. For example, in one alternative embodiment, there is only one pressure relief valve in one of the four above-described journal bearings. Alternatively, there could be two pressure relief valves wherein one pressure relief valve is in, for example, the first journal bearing and another pressure relief valve is in the second journal bearing. Alternatively, the one or more pressure relief valves could be located physically outside of the journal bearing yet still in the flow path of one or more of the journal bearings. Many other alternative configurations are also possible.

In the depicted embodiment, the gear pump 10 is a component in a jet engine fuel delivery system and is configured for in-flight delivery of jet fuel to a jet engine.

In the depicted embodiment, the first journal bearing 26 and the third journal bearing 30 include journal contact portions 42 that are in direct contact with each other. In the depicted embodiment, a portion of the first journal fluid flow path 38 is open to a portion of the third journal fluid flow path in the journal contact portion 42 thereby defining a joint fluid flow path 44 that allows fluid to flow from the first journal to the third journal and from the third journal to the first journal.

In the depicted embodiment, the second journal bearing 28 and the fourth journal bearing 32 include journal contact portions that are in direct contact with each other. In the depicted embodiment, a portion of the second journal fluid flow path is open to a portion of the fourth journal fluid flow path in the journal contact portion thereby defining a joint fluid flow path that allows fluid to flow from the second journal to the fourth journal and from the fourth journal to the second journal.

In the depicted embodiment, the first journal pressure relief valve 40, the second journal pressure relief valve, the third journal pressure relief valve, and the fourth journal pressure relief valve all are configured to allow flow therethrough at a common predetermined pressure. Alternatively, the predetermined pressure could be set at a different crack pressure.

In the depicted embodiment, the gear pump 10 includes a feed orifice 48 at a junction of the first journal fluid flow path 38 and the first bearing shaft interface 34.

In the depicted embodiment, the first journal pressure relief valve 40 is at least partially recessed in the first journal bearing 26.

In the depicted embodiment, a gear pump 10 is provided that includes a pump housing 12 including a fluid inlet 14 and a fluid outlet 16. A drive gear 18 is supported on a first shaft 20, the drive gear 18 being located between a first end portion of the first shaft 20 and a second end portion of the first shaft 20. A driven gear 22 is configured to mesh with the drive gear 18, the driven gear 22 supported on a second shaft 24, the driven gear 22 being located between a first end portion of the second shaft 24 and a second end portion of the second shaft 24. A first journal bearing 26 secured in the pump housing 12 configured to rotatably support the first end portion of the first shaft 20, the first journal bearing 26 defining a first bearing shaft interface 34, the first journal bearing 26 including a first high pressure portion 36, a first journal fluid flow path 38 that extends between the first high pressure portion 36 and the first bearing shaft interface 34; a second journal bearing 28 secured in the pump housing 12 configured to rotatably support the second end portion of the first shaft 20, the second journal bearing 28 defining a second bearing shaft interface, the second journal bearing 28 including a second high pressure portion, a second journal fluid flow path that extends between the second high pressure portion and the second bearing shaft interface; a third journal bearing 30 secured in the pump housing 12 configured to rotatably support the first end portion of the second shaft 24, the third journal bearing 30 defines a third bearing shaft interface, the third journal bearing 30 including a third high pressure portion, a third journal fluid flow path that extends between the third high pressure portion and the third bearing shaft interface; a fourth journal bearing 32 secured in the pump housing 12 configured to rotatably support the second end portion of the second shaft 24, the fourth journal bearing 32 defines a fourth bearing shaft interface, the fourth journal bearing 32 including a fourth high pressure portion, a fourth journal fluid flow path that extends between the fourth high pressure portion and the fourth bearing shaft interface; and a pressure relief valve in at least one of the first, second, third, or fourth journal fluid flow paths.

In the depicted embodiment, a journal bearing for a gear pump 10 is provided. The journal bearing includes a journal bearing configured to rotatably support a portion of a shaft, the journal bearing defining a bearing shaft interface, the journal bearing including a high pressure portion, a journal fluid flow path that extends between the high pressure portion and the bearing shaft interface, and a journal pressure relief valve in the journal fluid flow path.

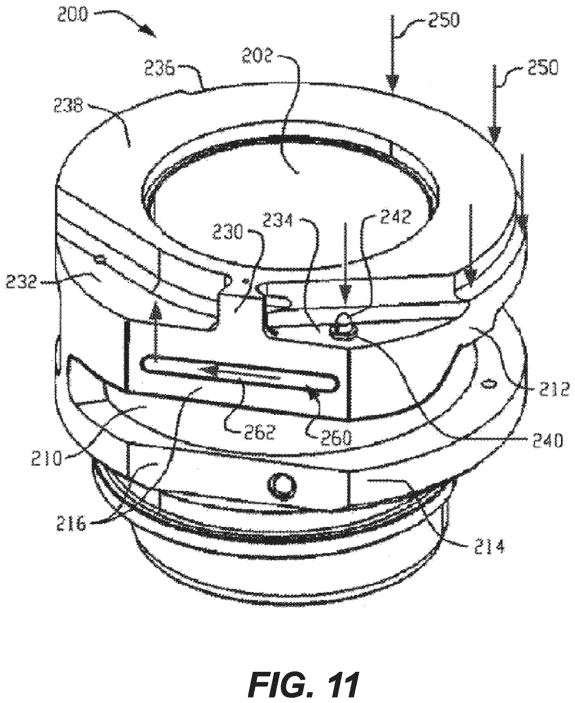

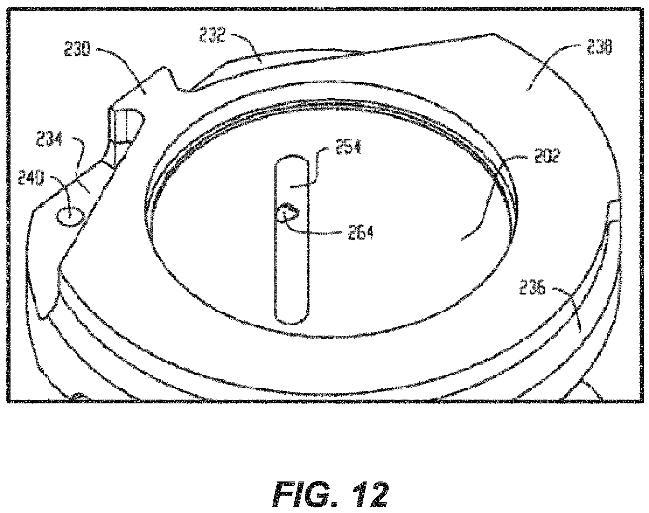

It should be appreciated that the present invention allows retrofitting existing gear pumps. Referring to FIGS. 11-12, a bearing member 200 that can be retrofitted to include the feature described above is provided. The bearing member 200 is an annular shaped body that has a spool 210 and first and second lands 212, 214. Flats 216 are provided along peripheral portions of the lands 212, 214 and are designed for mating, abutting engagement with the corresponding flats 216 of an adjacent bearing member 200. A dam 230 segregates an inlet ramp 232 and a discharge ramp 234. A high-pressure arc 236 extends axially inward from a face 238 of the bearing member 200 and over a perimeter/circumferential portion of the land 212. Radial gap flow as represented by reference arrows 250 still flows between the bearing member 200 and the surrounding pump housing (not shown); however, the screened flow through opening 240 covered by the screen 242 is isolated and interconnected with screen flow from the adjacent bearing member 200. To achieve this, a passage 260 is provided in the first land 212. More particularly, the passage 260 is connected to and in fluid communication with the opening 240 that provides filtered flow from the discharge ramp 234. The opening 240 is shown as a series of interconnected, reduced diameter portions 240a, 240b, 240c that extend from the discharge ramp 234 axially through the land 212, the small diameter portion 240c of which is in fluid communication with passage 260.

In one embodiment, the first journal bearing 26 includes a first screened flow through opening and the second journal bearing 28 includes a second screened flow through opening. The first screened flow through opening is interconnected with the second screened flow through opening. The pressure relief valve is in fluid communication with at least one of the first or second screened flow through openings. In one embodiment, the pressure relief valve is recessed in the first journal bearing 26 and coincident with the first screened flow through opening. This configuration allows for easy retrofitting existing journal bearings to include a pressure relief valve. For example, the first screened flow through opening can be machined (e.g., drilled out) to accommodate a pressure relief valve. The overall exterior dimensions and shape of the journal bearing is unchanged even after the incorporation of a pressure relief valve. As such, the pressure relief valve is located within the external dimensions of the journal bearing and does not impact its ability to fit into the space provided for the journal bearing within the gear pump.

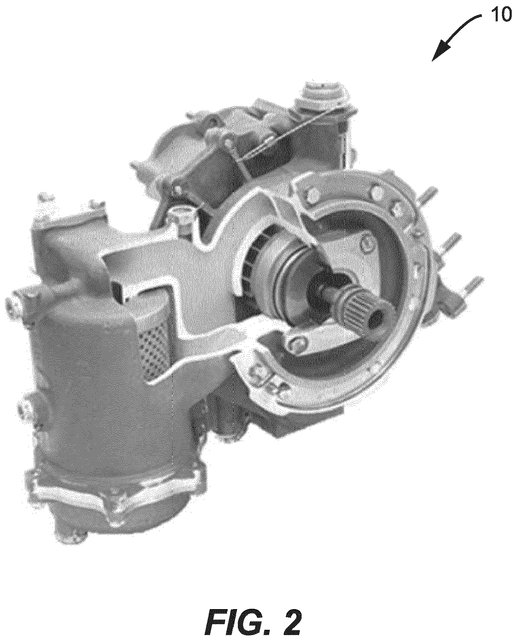

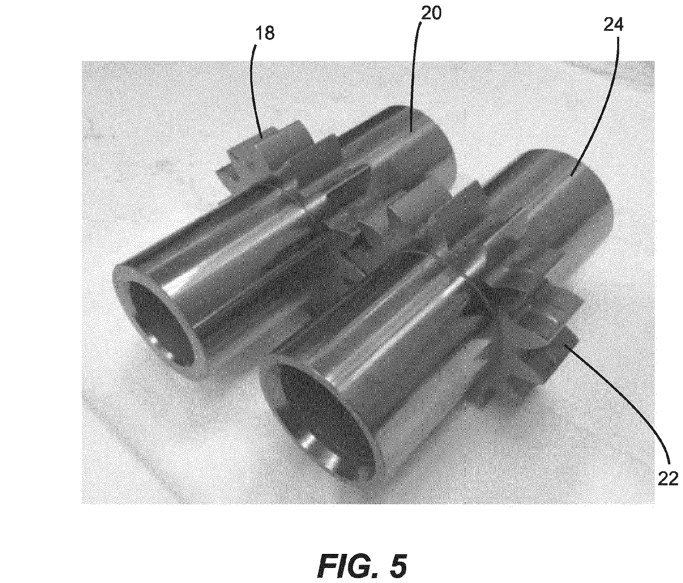

The passage 260 is preferably formed by discrete portions including a recess 262 that extends radially inward from the face 238 of the first land 212 and a small diameter opening 264 that communicates with the feed bearing lube groove 254 (FIG. 5) to supply bearing flow to the gear shaft 104 (FIG. 2). Thus, in the preferred embodiment, filtered flow from the discharge ramp 234 via the small diameter opening 264 is received at one end of the recess 262 and the filtered flow proceeds to opening 264 at the other end of the recess 262. This arrangement does not interfere with the radial gap flow that still flows between the bearing member 200 and pump housing (not shown) as represented by the reference numerals 250. Bearing lubrication flow is available in the event one of the lubrication feed orifices 240 becomes clogged. More specifically, the recesses 262 in the mating flats 216 of abutting bearing members 200 are aligned and in fluid communication with one another. If contaminants were to reduce or block screened flow from one of the openings 240 that receive filtered flow through screen 242, desired screened flow would not reach the passage 260. However, because the recesses 262 are joined to one another to form a combined passage 260, screened flow may be drawn from the passage 260 in the other bearing member 200. This increases the prospect for bearing lubrication flow to be supplied to the feed bearing lube groove 254 via passage 260.

Thus, there is disclosed a bearing body 200 that incorporates a gear-type pump bearing design, which ports fluid from a filter screen 242 located in a bearing assembly at the gear mesh outlet. The ported fluid is fed through a small diameter flow limiting orifice 240 and enters a slot or passage recess 262 included in a bearing flat 216. From the slot 262 included across the flat 216, flow exits through a passage 264 and enters the bearing to feed a bearing lubrication feature (e.g., pad) at the rotating interface with a gear shaft 104. The slot 262 is configured to provide the flow limiting the protected orifice in isolated communication with the bearing lubrication feature.

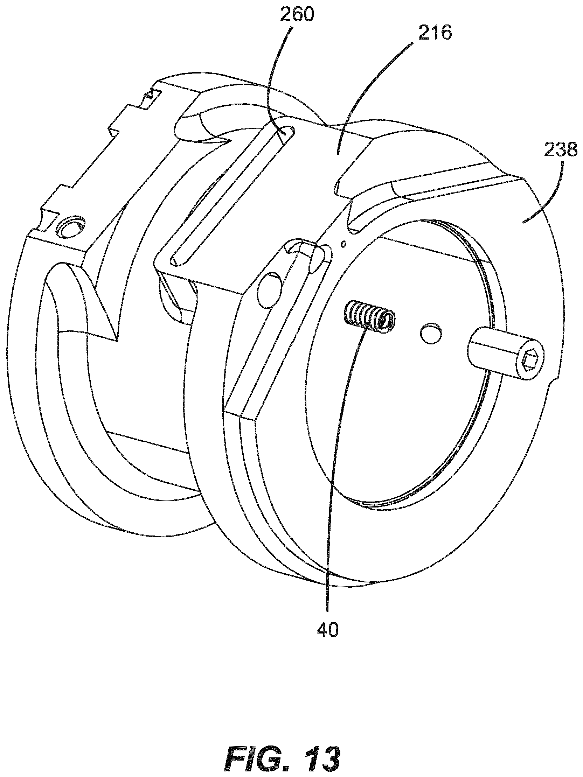

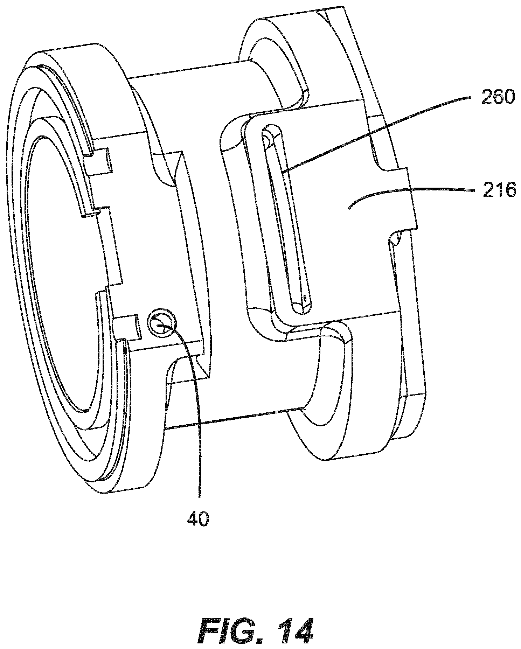

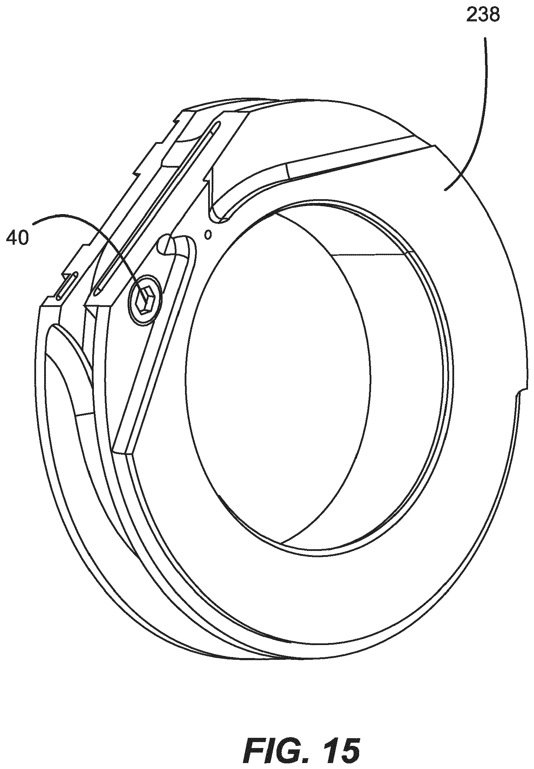

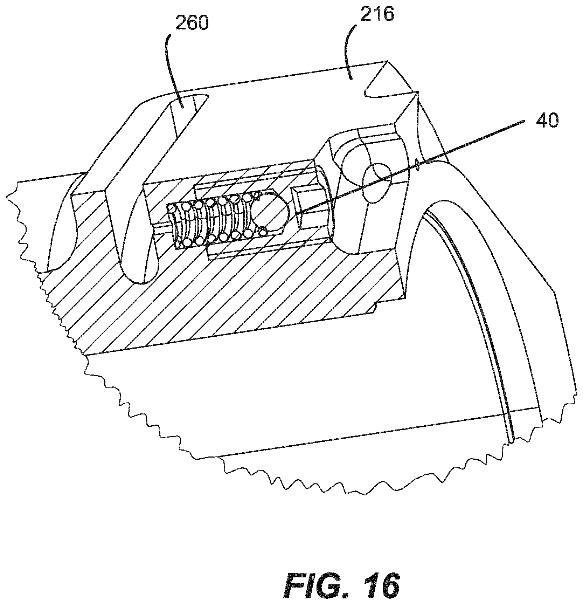

It should be appreciated that the bearing member 200 can be machined to include the feature of the bearing members 200 in other embodiments disclosed therein. FIGS. 13-16 disclose various variations of the bearing member 200.

The various embodiments described above are provided by way of illustration only and should not be construed to limit the claims attached hereto. Those skilled in the art will readily recognize various modifications and changes that may be made without following the example embodiments and applications illustrated and described herein, and without departing from the scope of the following claims.

## Claims

1. A gear pump (10) comprising:
a pump housing (12) including a fluid inlet (14) and a fluid outlet (16);
a drive gear (18) supported on a first shaft (20), the drive gear being located between a first end portion of the first shaft and a second end portion of the first shaft;
a driven gear (22) configured to mesh with the drive gear (18), the driven gear supported on a second shaft (24), the driven gear being located between a first end portion of the second shaft and a second end portion of the second shaft;
a first journal bearing (26) secured in the pump housing (12) configured to rotatably support the first end portion of the first shaft (20), the first journal bearing defining a first bearing shaft interface (34), the first journal bearing including a first high pressure portion (36), and a first journal fluid flow path (38) that extends between the first high pressure portion and the first bearing shaft interface;
a second journal bearing (28) secured in the pump housing (12) configured to rotatably support the second end portion of the first shaft (20), the second journal bearing defining a second bearing shaft interface, the second journal bearing including a second high pressure portion, and a second journal fluid flow path that extends between the second high pressure portion and the second bearing shaft interface;
a third journal bearing (30) secured in the pump housing (12) configured to rotatably support the first end portion of the second shaft (24), the third journal bearing defines a third bearing shaft interface, the third journal bearing including a third high pressure portion, and a third journal fluid flow path that extends between the third high pressure portion and the third bearing shaft interface;
a fourth journal bearing (32) secured in the pump housing (12) configured to rotatably support the second end portion of the second shaft (24), the fourth journal bearing defines a fourth bearing shaft interface, the fourth journal bearing including a fourth high pressure portion, and a fourth journal fluid flow path that extends between the fourth high pressure portion and the fourth bearing shaft interface; and
a first, second, third, and fourth pressure relief valve (40) in each of the first, second, third, and fourth journal fluid flow paths (38), respectively;
wherein the first journal bearing (26) and the third journal bearing (30) include journal contact portions (42) that are in direct contact with each other, wherein a portion of the first journal fluid flow path is open to a portion of the third journal fluid flow path in the journal contact portion (42) thereby defining a joint fluid flow path (44) that allows fluid to flow from the first journal bearing (26) to the third journal bearing (30) and from the third journal bearing (30) to the first journal bearing (26); and
wherein the second journal bearing (28) and the fourth journal bearing (32) include journal contact portions that are in direct contact with each other, wherein a portion of the second journal fluid flow path is open to a portion of the fourth journal fluid flow path in the journal contact portion thereby defining a joint fluid flow path that allows fluid to flow from the second journal bearing (28) to the fourth journal bearing (32) and from the fourth journal bearing (32) to the second journal bearing (26).

2. A jet engine fuel delivery system with a gear pump according to claim 1, wherein the gear pump (10) is configured for in-flight delivery of jet fuel to a jet engine.

3. The gear pump of claim 1, wherein the first pressure relief valve (40), the second pressure relief valve, the third pressure relief valve, and the fourth pressure relief valve all are configured to allow flow therethrough at a common predetermined pressure.

4. The gear pump of claim 1, wherein the first pressure relief valve (40) is recessed into the first journal bearing (26), the second pressure relief valve is recessed into the second journal bearing (28), the third pressure relief valve is recessed into the third journal bearing (30), and the fourth pressure relief valve is recessed into the fourth journal bearing (32).

5. The gear pump of claim 1, further comprising a feed orifice (48) at a junction of the first journal fluid flow path (38) and the first bearing shaft interface (34).

6. The gear pump of claim 1, comprising a feed orifice (48) in each of the first, second, third, and fourth journal bearings (26, 28, 30, 32).

7. The gear pump of claim 4, wherein the first, second, third, and fourth pressure relief valves (40) are partially recessed or fully recessed in the respective journal bearing (26, 28, 30, 32).

8. The gear pump of claim 1, wherein the first journal bearing (26) includes a bearing member (200) having a side face that includes a dam (230) that segregates an inlet ramp (232) and a discharge ramp (234), and a high-pressure arc (236) that extends axially inward from a face (238) of the bearing member (200).

9. The gear pump of claim 8, wherein the first journal bearing (26) includes a first screened flow through opening and the second journal bearing (28) includes a second screened flow through opening, wherein the first screened flow through opening is interconnected with the second screened flow through opening, wherein the first or second pressure relief valve (40) is in fluid communication with at least one of the first or second screened flow through openings.

10. The gear pump of claim 9, wherein the first pressure relief valve (40) is fully recessed in the first journal bearing (26) and coincident with the first screened flow through opening.

11. The gear pump of claim 10, wherein the second pressure relief valve is fully recessed in the second journal bearing (28) and coincident with the second screened flow through opening in the second journal bearing.

## Patentansprüche

1. Zahnradpumpe (10), umfassend:
ein Pumpengehäuse (12) mit einem Fluideinlass (14) und einem Fluidauslass (16);
ein Antriebszahnrad (18), das auf einer ersten Welle (20) gelagert ist, wobei das Antriebszahnrad zwischen einem ersten Endbereich der ersten Welle und einem zweiten Endbereich der ersten Welle angeordnet ist;
ein angetriebenes Zahnrad (22), das dazu ausgebildet ist, mit dem Antriebszahnrad (18) zu kämmen, wobei das angetriebene Zahnrad auf einer zweiten Welle (24) gelagert ist, wobei das angetriebene Zahnrad zwischen einem ersten Endbereich der zweiten Welle und einem zweiten Endbereich der zweiten Welle angeordnet ist;
ein erstes Gleitlager (26), das in dem Pumpengehäuse (12) befestigt ist und dazu ausgebildet ist, den ersten Endbereich der ersten Welle (20) drehbar zu lagern, wobei das erste Gleitlager eine erste Lagerwellen-Grenzfläche (34) definiert, wobei das erste Gleitlager einen ersten Hochdruckbereich (36) sowie einen ersten Gleitlager-Fluidströmungspfad (38) umfasst, der sich zwischen dem ersten Hochdruckbereich und der ersten Lagerwellen-Grenzfläche erstreckt;
ein zweites Gleitlager (28), das in dem Pumpengehäuse (12) befestigt ist und dazu ausgebildet ist, den zweiten Endbereich der ersten Welle (20) drehbar zu lagern, wobei das zweite Gleitlager eine zweite Lagerwellen-Grenzfläche definiert, wobei das zweite Gleitlager einen zweiten Hochdruckbereich sowie einen zweiten Gleitlager-Fluidströmungspfad umfasst, der sich zwischen dem zweiten Hochdruckbereich und der zweiten Lagerwellen-Grenzfläche erstreckt;
ein drittes Gleitlager (30), das in dem Pumpengehäuse (12) befestigt ist und dazu ausgebildet ist, den ersten Endbereich der zweiten Welle (24) drehbar zu lagern, wobei das dritte Gleitlager eine dritte Lagerwellen-Grenzfläche definiert, wobei das dritte Gleitlager einen dritten Hochdruckbereich sowie einen dritten Gleitlager-Fluidströmungspfad umfasst, der sich zwischen dem dritten Hochdruckbereich und der dritten Lagerwellen-Grenzfläche erstreckt;
ein viertes Gleitlager (32), das in dem Pumpengehäuse (12) befestigt ist und dazu ausgebildet ist, den zweiten Endbereich der zweiten Welle (24) drehbar zu lagern, wobei das vierte Gleitlager eine vierte Lagerwellen-Grenzfläche definiert, wobei das vierte Gleitlager einen vierten Hochdruckbereich sowie einen vierten Gleitlager-Fluidströmungspfad umfasst, der sich zwischen dem vierten Hochdruckbereich und der vierten Lagerwellen-Grenzfläche erstreckt; und
ein erstes, zweites, drittes und viertes Druckentlastungsventil (40) in jeweils dem ersten, zweiten, dritten bzw. vierten Gleitlager-Fluidströmungspfad (38);
wobei das erste Gleitlager (26) und das dritte Gleitlager (30) Gleitlager-Kontaktbereiche (42) umfassen, die miteinander in direktem Kontakt stehen, wobei ein Bereich des ersten Gleitlager-Fluidströmungspfads im Gleitlager-Kontaktbereich (42) zu einem Bereich des dritten Gleitlager-Fluidströmungspfads hin offen ist, wodurch ein gemeinsamer Fluidströmungspfad (44) definiert wird, der es Fluid ermöglicht, von dem ersten Gleitlager (26) zu dem dritten Gleitlager (30) und von dem dritten Gleitlager (30) zu dem ersten Gleitlager (26) zu strömen; und
wobei das zweite Gleitlager (28) und das vierte Gleitlager (32) Gleitlager-Kontaktbereiche umfassen, die miteinander in direktem Kontakt stehen, wobei ein Bereich des zweiten Gleitlager-Fluidströmungspfads im Gleitlager-Kontaktbereich zu einem Bereich des vierten Gleitlager-Fluidströmungspfads hin offen ist, wodurch ein gemeinsamer Fluidströmungspfad definiert wird, der es Fluid ermöglicht, von dem zweiten Gleitlager (28) zu dem vierten Gleitlager (32) und von dem vierten Gleitlager (32) zu dem zweiten Gleitlager (26) zu strömen.

2. Kraftstoffzufuhrsystem für ein Düsentriebwerk mit einer Zahnradpumpe nach Anspruch 1, wobei die Zahnradpumpe (10) für die Zufuhr von Düsentreibstoff zu einem Düsentriebwerk während des Flugs ausgebildet ist.

3. Zahnradpumpe nach Anspruch 1, wobei das erste Druckentlastungsventil (40), das zweite Druckentlastungsventil, das dritte Druckentlastungsventil und das vierte Druckentlastungsventil alle dazu ausgebildet sind, bei einem gemeinsamen vorbestimmten Druck einen Durchfluss durch diese hindurch zu ermöglichen.

4. Zahnradpumpe nach Anspruch 1, wobei das erste Druckentlastungsventil (40) zurückversetzt in das erste Gleitlager (26) angeordnet ist, das zweite Druckentlastungsventil zurückversetzt in das zweite Gleitlager (28) angeordnet ist, das dritte Druckentlastungsventil zurückversetzt in das dritte Gleitlager (30) angeordnet ist und das vierte Druckentlastungsventil zurückversetzt in das vierte Gleitlager (32) angeordnet ist.

5. Zahnradpumpe nach Anspruch 1, ferner umfassend eine Zuführöffnung (48) an einer Verbindungsstelle des ersten Gleitlager-Fluidströmungspfads (38) und der ersten Lagerwellen-Grenzfläche (34).

6. Zahnradpumpe nach Anspruch 1, umfassend eine Zuführöffnung (48) in jedem des ersten, zweiten, dritten und vierten Gleitlagers (26, 28, 30, 32).

7. Zahnradpumpe nach Anspruch 4, wobei das erste, zweite, dritte und vierte Druckentlastungsventil (40) teilweise oder vollständig zurückversetzt in das jeweilige Gleitlager (26, 28, 30, 32) angeordnet sind.

8. Zahnradpumpe nach Anspruch 1, wobei das erste Gleitlager (26) ein Lagerelement (200) umfasst, das eine Seitenfläche aufweist, die einen Damm (230) umfasst, der eine Einlassrampe (232) und eine Auslassrampe (234) voneinander trennt, sowie einen Hochdruckbogen (236), der sich axial nach innen von einer Stirnfläche (238) des Lagerelements (200) erstreckt.

9. Zahnradpumpe nach Anspruch 8, wobei das erste Gleitlager (26) eine erste mit einem Sieb versehene Durchflussöffnung umfasst und das zweite Gleitlager (28) eine zweite mit einem Sieb versehene Durchflussöffnung umfasst, wobei die erste mit einem Sieb versehene Durchflussöffnung mit der zweiten mit einem Sieb versehenen Durchflussöffnung verbunden ist, wobei das erste oder zweite Druckentlastungsventil (40) mit mindestens einer von der ersten oder zweiten mit einem Sieb versehenen Durchflussöffnung in Fluidverbindung steht.

10. Zahnradpumpe nach Anspruch 9, wobei das erste Druckentlastungsventil (40) vollständig in das erste Gleitlager (26) zurückversetzt angeordnet und mit der ersten mit einem Sieb versehenen Durchflussöffnung deckungsgleich ist.

11. Zahnradpumpe nach Anspruch 10, wobei das zweite Druckentlastungsventil vollständig in das zweite Gleitlager (28) zurückversetzt angeordnet und mit der zweiten mit einem Sieb versehenen Durchflussöffnung in dem zweiten Gleitlager deckungsgleich ist.

## Revendications

1. Pompe à engrenages (10), comprenant :
un corps de pompe (12) incluant une entrée de fluide (14) et une sortie de fluide (16) ;
un engrenage menant (18) supporté sur un premier arbre (20), l'engrenage menant étant situé entre une première partie d'extrémité du premier arbre et une seconde partie d'extrémité du premier arbre ;
un engrenage mené (22) configuré pour s'engrener avec l'engrenage menant (18), l'engrenage mené étant supporté sur un second arbre (24), l'engrenage mené étant situé entre une première partie d'extrémité du second arbre et une seconde partie d'extrémité du second arbre ;
un premier palier tourillon (26) fixé dans le corps de pompe (12) configuré pour supporter de façon rotative la première partie d'extrémité du premier arbre (20), le premier palier tourillon définissant une première interface palier-arbre (34), le premier palier tourillon incluant une première partie haute pression (36), et un premier chemin d'écoulement de fluide de tourillon (38) qui s'étend entre la première partie haute pression et la première interface palier-arbre ;
un deuxième palier tourillon (28) fixé dans le corps de pompe (12) configuré pour supporter de façon rotative la seconde partie d'extrémité du premier arbre (20), le deuxième palier tourillon définissant une deuxième interface palier-arbre, le deuxième palier tourillon incluant une deuxième partie haute pression, et un deuxième chemin d'écoulement de fluide de tourillon qui s'étend entre la deuxième partie haute pression et la deuxième interface palier-arbre ;
un troisième palier tourillon (30) fixé dans le corps de pompe (12) configuré pour supporter de façon rotative la première partie d'extrémité du second arbre (24), le troisième palier tourillon définit une troisième interface palier-arbre, le troisième palier tourillon incluant une troisième partie haute pression, et un troisième chemin d'écoulement de fluide de tourillon qui s'étend entre la troisième partie haute pression et la troisième interface palier-arbre ;
un quatrième palier tourillon (32) fixé dans le corps de pompe (12) configuré pour supporter de façon rotative la seconde partie d'extrémité du second arbre (24), le quatrième palier tourillon définit une quatrième interface palier-arbre, le quatrième palier tourillon incluant une quatrième partie haute pression, et un quatrième chemin d'écoulement de fluide de tourillon qui s'étend entre la quatrième partie haute pression et la quatrième interface palier-arbre ; et
des première, deuxième, troisième, et quatrième soupapes de détente de pression (40) dans chacun des premier, deuxième, troisième, et quatrième chemins d'écoulement de fluide de tourillon (38), respectivement ;
dans laquelle le premier palier tourillon (26) et le troisième palier tourillon (30) incluent des parties de contact de tourillon (42) qui sont en contact direct l'une avec l'autre, dans laquelle une partie du premier chemin d'écoulement de fluide de tourillon est ouverte sur une partie du troisième chemin d'écoulement de fluide de tourillon dans la partie de contact de tourillon (42) définissant ainsi un chemin d'écoulement de fluide conjoint (44) qui permet à un fluide de s'écouler depuis le premier palier tourillon (26) jusqu'au troisième palier tourillon (30) et depuis le troisième palier tourillon (30) jusqu'au premier palier tourillon (26) ; et
dans laquelle le deuxième palier tourillon (28) et le quatrième palier tourillon (32) incluent des parties de contact de tourillon qui sont en contact direct l'une avec l'autre, dans laquelle une partie du deuxième chemin d'écoulement de fluide de tourillon est ouverte sur une partie du quatrième chemin d'écoulement de fluide de tourillon dans la partie de contact de tourillon définissant ainsi un chemin d'écoulement de fluide conjoint qui permet à un fluide de s'écouler depuis le deuxième palier tourillon (28) jusqu'au quatrième palier tourillon (32) et depuis le quatrième palier tourillon (32) jusqu'au deuxième palier tourillon (26).

2. Système de distribution de carburant de moteur à réaction avec une pompe à engrenages selon la revendication 1, dans lequel la pompe à engrenages (10) est configurée pour distribution en vol de carburant de réaction à un moteur à réaction.

3. Pompe à engrenages de la revendication 1, dans laquelle la première soupape de détente de pression (40), la deuxième soupape de détente de pression, la troisième soupape de détente de pression, et la quatrième soupape de détente de pression sont toutes configurées pour permettre un écoulement à travers celles-ci à une pression prédéterminée commune.

4. Pompe à engrenages de la revendication 1, dans laquelle la première soupape de détente de pression (40) est évidée dans le premier palier tourillon (26), la deuxième soupape de détente de pression est évidée dans le deuxième palier tourillon (28), la troisième soupape de détente de pression est évidée dans le troisième palier tourillon (30), et la quatrième soupape de détente de pression est évidée dans le quatrième palier tourillon (32).

5. Pompe à engrenages de la revendication 1, comprenant en outre un orifice d'alimentation (48) à une jonction du premier chemin d'écoulement de fluide de tourillon (38) et de la première interface palier-arbre (34).

6. Pompe à engrenages de la revendication 1, comprenant un orifice d'alimentation (48) dans chacun des premier, deuxième, troisième, et quatrième paliers tourillons (26, 28, 30, 32).

7. Pompe à engrenages de la revendication 4, dans laquelle les première, deuxième, troisième, et quatrième soupapes de détente de pression (40) sont partiellement évidées ou complètement évidées dans le palier tourillon respectif (26, 28, 30, 32).

8. Pompe à engrenages de la revendication 1, dans laquelle le premier palier tourillon (26) inclut un organe palier (200) ayant une face latérale qui inclut un barrage (230) qui sépare une rampe d'entrée (232) et une rampe d'évacuation (234), et un arc haute pression (236) qui s'étend axialement vers l'intérieur à partir d'une face (238) de l'organe palier (200).

9. Pompe à engrenages de la revendication 8, dans laquelle le premier palier tourillon (26) inclut une première ouverture d'écoulement à crépine et le deuxième palier tourillon (28) inclut une deuxième ouverture d'écoulement à crépine, dans laquelle la première ouverture d'écoulement à crépine est raccordée à la deuxième ouverture d'écoulement à crépine, dans laquelle la première ou deuxième soupape de détente de pression (40) est en communication fluidique avec au moins une de la première ou de la deuxième ouverture d'écoulement à crépine.

10. Pompe à engrenages de la revendication 9, dans laquelle la première soupape de détente de pression (40) est complètement évidée dans le premier palier tourillon (26) et coïncide avec la première ouverture d'écoulement à crépine.

11. Pompe à engrenages de la revendication 10, dans laquelle la deuxième soupape de détente de pression est complètement évidée dans le deuxième palier tourillon (28) et coïncide avec la deuxième ouverture d'écoulement à crépine dans le deuxième palier tourillon.
